(19) Europäisches Patentamt
European Patent Office
Office européen des brevets

(11) **EP 3 801 985 B1**

(12) **FASCICULE DE BREVET EUROPEEN**

(45) Date de publication et mention
de la délivrance du brevet:
**20.07.2022   Bulletin 2022/29**

(21) Numéro de dépôt: **19726024.3**

(22) Date de dépôt: **28.05.2019**

(51) Classification Internationale des Brevets (IPC):
**B24C 1/10** *(2006.01)*     **B24C 11/00** *(2006.01)*

(52) Classification Coopérative des Brevets (CPC):
**B24C 1/10; B24C 11/00**

(86) Numéro de dépôt international:
**PCT/EP2019/063808**

(87) Numéro de publication internationale:
**WO 2019/229057 (05.12.2019 Gazette 2019/49)**

(54) **POUDRE DE GRENAILLAGE**

KUGELSTRAHLPULVER

SHOT-PEENING POWDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.05.2018   FR 1854492**

(43) Date de publication de la demande:
**14.04.2021   Bulletin 2021/15**

(73) Titulaire: **SAINT-GOBAIN CENTRE DE RECHERCHES ET D'ETUDES EUROPEEN**
**92400 Courbevoie (FR)**

(72) Inventeurs:
• **CABRERO, Julien**
 **13300 SALON DE PROVENCE (FR)**
• **BEAUDONNET, Anne-Laure**
 **84440 ROBION (FR)**
• **BOUSSANT-ROUX, Yves, Léon, Marcel**
 **84140 MONTFAVET (FR)**
• **LEVY, Benjamin, Gilbert, Robert**
 **13001 Marseille (FR)**

(74) Mandataire: **Nony**
**11 rue Saint-Georges**
**75009 Paris (FR)**

(56) Documents cités:
**FR-A1- 2 925 378     JP-A- 2001 113 465**

• **DATABASE WPI Week 200253 Thomson Scientific, London, GB; AN 2002-494216 XP002789050, -& JP 2002 114968 A (MARUO CALCIUM CO LTD) 16 avril 2002 (2002-04-16)**

## Description

### Domaine technique

L'invention concerne un procédé de grenaillage, notamment pour le traitement de surfaces métalliques, par exemple en acier, et une poudre pouvant être utilisée dans un tel procédé.

### Art antérieur

Le document FR 2 925 378 A1 divulgue une poudre de grenaillage constituée de particules en céramique, comportant des billes, une bille étant une particule présentant une sphéricité supérieure ou égale à 0,75

Le document JP 2002 114968 A décrit un procédé de grenaillage selon le préambule de la revendication 9, ce procédé comportant les étapes suivantes :

a) projection d'une poudre initiale sur une surface à traiter d'une pièce ;

b) récupération de ladite poudre projetée et traitement de ladite poudre récupérée de manière à obtenir une poudre recyclée ;

c) remplacement, au moins partiel, de ladite poudre initiale par ladite poudre recyclée de manière à obtenir une poudre reconditionnée, et reprise à l'étape a) avec la poudre reconditionnée.

Le grenaillage consiste à projeter à grande vitesse des particules, généralement des billes, sur la pièce à traiter. Les particules sont réalisées dans des matériaux de dureté adaptée à l'objectif à atteindre. On utilise couramment des billes en acier ou des billes céramiques.

Le grenaillage peut être mis en œuvre dans un but de nettoyage, par exemple pour l'enlèvement de la rouille (décalaminage), pour créer des précontraintes de compression à la surface d'une pièce (« grenaillage de précontrainte », en anglais *« shot-peening »*) ou pour modifier l'aspect de surface d'une pièce, notamment la rugosité, la luminosité ou la brillance (en anglais *« cosmetic finishing »*).

Pour limiter l'impact environnemental et réduire les coûts, les billes sont classiquement récupérées après avoir été projetées, triées pour éliminer les morceaux de billes cassées, puis réutilisées. Les morceaux de billes n'étant pas sphériques, leur projection peut en effet conduire à une altération de la pièce, voire être à l'origine de sa rupture. Le taux de morceaux de billes, c'est-à-dire le rapport du nombre de morceaux de billes sur le nombre de particules récupérées, doit de préférence rester inférieur à 5%.

Classiquement, le tri comporte au moins les trois opérations successives suivantes :

- une aspiration lors de la projection, pour éliminer les petites particules,
- un tamisage, et
- une séparation au moyen d'un séparateur à spirale, ou « spiralé » (en anglais *« spiral separator »*).

L'aspiration et le tamisage permettent de sélectionner les particules en fonction de leurs tailles. Le séparateur spiralé permet de sélectionner les particules en fonction de leur forme.

Le tri est une étape complexe et qui souvent ralentit le grenaillage. En particulier, les capacités de traitement d'un séparateur spiralé sont faibles par rapport aux débits de projection.

Il existe un besoin pour un procédé de grenaillage plus simple et permettant cependant de maintenir la quantité de morceaux de billes dans la poudre projetée à un niveau faible.

Un but de l'invention est de répondre, au moins partiellement, à ce besoin.

### Résumé de l'invention

L'invention propose une poudre de grenaillage selon la revendication 1 constituée de particules en céramique, comportant plus de 95% en masse de billes, présentant une taille médiane $D_{50}$ supérieure à 50 $\mu$m et inférieure à 1200 $\mu$m, et présentant une valeur $(D_{90}-D_{10})/D_{50}$, ou << S >>, telle que

$$S \leq -0,126 . \ln(D_{50}) + 0,980 \qquad (1).$$

Comme cela apparaîtra plus en détail dans la suite de la description, de manière surprenante, la projection d'une telle poudre, présentant une valeur S, ou « span », respectant la relation (1), permet de récupérer une poudre qui, par simple tamisage, aboutit à une poudre recyclée dont le taux de morceaux de billes est très faible. Le recyclage de la poudre projetée est donc rapide et beaucoup moins coûteux que le recyclage selon la technique antérieure.

Une poudre selon l'invention peut encore comporter une ou plusieurs des caractéristiques optionnelles suivantes :

- $S \leq -0,116.\ln(D_{50}) + 0,905$, de préférence $S \leq -0,114.\ln(D_{50}) + 0,869$, de préférence $S \leq - 0,107.1n(D_{50}) + 0,800$ ;
- La poudre comporte plus de 98% en masse de billes ;
- La poudre comporte moins de 5% en nombre de morceaux de billes ;
- La poudre présente une teneur totale en $ZrO_2 + SiO_2 + Al_2O_3 + CeO_2 + Y_2O_3$ supérieure à 80%, en pourcentages massiques sur la base des oxydes ;
- La poudre présente une analyse chimique telle que, en pourcentages massiques sur la base des oxydes et pour un total de 100% :

$ZrO_2$ : 77% - 86% ;
$CeO_2$ : 14% - 19% ;
Oxydes autres que $ZrO_2$ et $CeO_2$ : $\leq$ 3% ;
ou telle que
$ZrO_2$ : 58% - 72% ;
$SiO_2$ : 27% - 34% ;
$Al_2O_3$ : $\leq$ 10% ;
Oxydes autres que $ZrO_2$, $SiO_2$ et $Al_2O_3$ : $\leq$ 5% ;
ou telle que
$ZrO_2$ : 89% - 96% ;
$Y_2O_3$ : 3% - 8% ;
Oxydes autres que $ZrO_2$ et $Al_2O_3$ : $\leq$ 3%.

L'invention concerne aussi un procédé de grenaillage comportant les étapes suivantes :

a) projection d'une poudre initiale sur une surface à traiter d'une pièce ;
b) récupération de ladite poudre projetée et traitement de ladite poudre récupérée de manière à obtenir une poudre recyclée ;
c) remplacement, au moins partiel, de ladite poudre initiale par ladite poudre recyclée de manière à obtenir une poudre reconditionnée et reprise à l'étape a) avec la poudre reconditionnée ;

la poudre initiale étant conforme à l'invention.

Comme cela apparaîtra plus en détail dans la suite de la description, la poudre recyclée et la poudre reconditionnée sont de préférence également conformes à l'invention, même avec un traitement de la poudre projetée qui ne comporte pas de tri au moyen d'un séparateur spiralé.

De préférence, le traitement à l'étape b) ne comporte pas d'opération de tri en fonction de la forme des particules de la poudre, et en particulier d'opération de tri au moyen d'un séparateur spiralé.

De préférence, le traitement à l'étape b) ne comporte qu'une ou plusieurs opérations choisies dans le groupe formé par le tamisage et l'aspiration, ladite aspiration pouvant être réalisée avec ou sans dispositif de sélection de taille, comme par exemple un cyclone. De préférence, le procédé ne comporte, comme opérations de tri, qu'une opération de tamisage à l'étape b) et, de préférence, une opération d'aspiration, en particulier une opération d'aspiration pendant la projection à l'étape a).

Le procédé peut encore comporter une ou plusieurs des caractéristiques optionnelles suivantes :

- le traitement à l'étape b) est constitué d'un tamisage et, optionnellement, d'une aspiration ;
- la pièce est choisie dans le groupe formé par une pièce automobile, un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

L'invention concerne enfin l'utilisation d'un procédé selon l'invention pour créer des précontraintes de compression sur la surface à traiter, la poudre initiale présentant une taille médiane $D_{50}$ supérieure à 80 $\mu$m et inférieure à 1000 $\mu$m, ou pour modifier l'aspect de la surface à traiter, la poudre initiale présentant une taille médiane $D_{50}$ inférieure à 200 $\mu$m.

## Définitions

Par « bille », on entend une particule présentant une sphéricité, c'est-à-dire un rapport entre son plus petit diamètre de Ferret et son plus grand diamètre de Ferret, supérieure ou égale à 0,75, quelle que soit la façon par laquelle cette sphéricité a été obtenue.

Par « poudre de billes », on entend une poudre comportant plus de 95% en masse de billes.

Par « produit fondu » ou « produit obtenu par fusion », on entend un produit obtenu par solidification, par refroidissement, d'un bain de liquide en fusion. « Un bain de liquide en fusion » est une masse qui, pour conserver sa forme, doit être contenue dans un récipient. Un bain de liquide en fusion peut contenir des parties solides, mais en quantité insuffisante pour qu'elles puissent structurer ladite masse.

On appelle « percentiles » 10 (notée $D_{10}$), 50 (notée $D_{50}$), 90 (notée $D_{90}$) et 99,5 (notée $D_{99,5}$), les tailles de particules correspondant aux pourcentages égaux respectivement à 10%, 50%, 90% et 99,5%, en masse, sur la courbe de distribution granulométrique cumulée des tailles de particules de la poudre, lesdites tailles de particules étant classées par ordre croissant. Selon cette définition 10% en masse des particules de la poudre ont ainsi une taille inférieure à $D_{10}$ et 90% des particules, en masse, présentent une taille supérieure ou égale à $D_{10}$. Les percentiles sont déterminés à l'aide d'une distribution granulométrique réalisée à l'aide d'un granulomètre laser.

On appelle « taille médiane » d'une poudre de particules, le percentile 50. La taille médiane divise donc les particules de la poudre en première et deuxième populations égales en masse, ces première et deuxième populations ne comportant que des particules présentant une taille supérieure ou égale, ou inférieure respectivement, à la taille médiane.

On appelle « taille maximale » d'une poudre de particules, le percentile 99,5.

Lorsqu'il est fait référence à la zircone ou à $ZrO_2$, il y a lieu de comprendre $(ZrO_2+HfO_2)$, avec $HfO_2 < 5\%$, de préférence $HfO_2 < 3\%$, de préférence $HfO_2 < 2\%$. En effet, un peu de $HfO_2$, chimiquement indissociable de $ZrO_2$ et présentant des propriétés semblables, est toujours naturellement présent dans les sources de zircone. L'oxyde d'hafnium n'est alors pas considéré comme une impureté.

Une teneur totale de plusieurs oxydes, par exemple $ZrO_2 + SiO_2 + Al_2O_3 + CeO_2 + Y_2O_3$, n'implique pas que chacun desdits oxydes soit présent, même si, dans un mode de réalisation, chacun desdits oxydes est présent.

Le « recouvrement » est le rapport de la surface de la pièce impactée, c'est-à-dire modifiée par l'impact des particules projetées, sur la surface totale vers laquelle la poudre de particules est projetée, c'est-à-dire la surface de la pièce exposée au jet des particules projetées. Le recouvrement est exprimé en pourcentages. Le recouvrement est donc inférieur à 100% tant qu'il existe, au sein de la surface qui croise le jet de particules, des zones non modifiées par les impacts de ces particules.

Le taux de recouvrement, exprimé en pourcentage, est le rapport du temps de traitement sur le temps de traitement permettant d'obtenir un recouvrement égal à 98%. Ainsi un taux de recouvrement égal à 200% exprime le fait que la durée du traitement est égale à deux fois celle nécessaire pour atteindre un recouvrement égal à 98%.

Un matériau « céramique » est classiquement un matériau qui est ni métallique, ni organique.

Un précurseur d'un oxyde est un constituant qui se transforme en ledit oxyde lors de la fabrication d'une poudre selon l'invention.

Sauf mention contraire, les pourcentages utilisés pour caractériser une composition se réfèrent toujours à des pourcentages massiques sur la base des oxydes.

## Brève description des figures

D'autres caractéristiques et avantages de l'invention apparaîtront encore à la lecture de la description détaillée qui va suivre et à l'examen du dessin annexé dans lequel

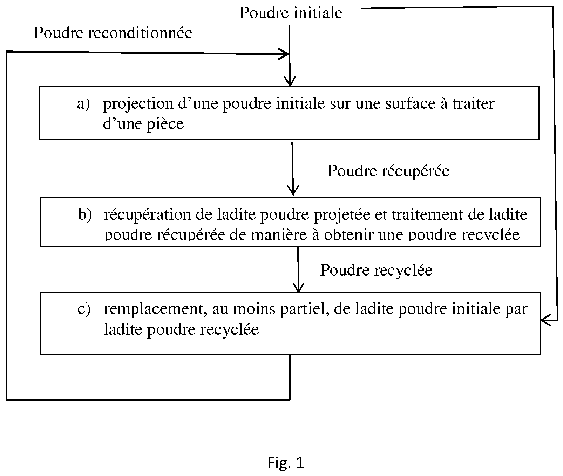

- la figure 1 représente, schématiquement, les différentes étapes d'un procédé selon l'invention ; et
- la figure 2 représente une photo d'une poudre recyclée sur laquelle on distingue les billes 10 et les morceaux de billes 12.

## Description détaillée

### *Procédé de fabrication de la poudre*

Pour fabriquer une poudre de billes fondues selon l'invention, on peut procéder suivant un procédé comportant les étapes suivantes :

i) préparation d'une charge de départ comportant des constituants des billes à fabriquer et/ou des précurseurs de ces constituants ;

ii) fusion de la charge de départ de manière à former un bain de liquide en fusion ;

iii) coulage du bain de manière à former un filet de liquide en fusion et dispersion de ce filet en gouttelettes ;

iv) refroidissement des gouttelettes de manière à former une poudre de billes;

v) sélection granulométrique de manière que la poudre soit conforme à l'invention.

A l'étape i), des poudres de constituants et/ou de précurseurs sont mélangées de manière à constituer un mélange sensiblement homogène.

La composition de la charge de départ est ajustée de manière à obtenir, à l'issue de l'étape iv), des billes présentant la composition souhaitée. Dans le cadre de la fabrication de billes céramiques, l'analyse chimique des billes est généralement sensiblement identique à celle de la charge de départ. En outre, le cas échéant, l'homme du métier sait comment adapter la composition de la charge de départ pour tenir compte de la présence d'oxydes volatils, ou pour tenir compte de la perte en $SiO_2$ lorsque la fusion est opérée dans des conditions réductrices.

A l'étape ii), la charge de départ est fondue, de préférence dans un four à arc électrique. L'électrofusion permet en effet la fabrication de grandes quantités de produit avec des rendements intéressants. Mais tous les fours connus sont envisageables, comme un four à induction, un four solaire ou un four à plasma par exemple, pourvu qu'ils permettent de faire fondre, de préférence complètement, la charge de départ. Les conditions peuvent être oxydantes ou réductrices.

A l'étape ii), on peut par exemple utiliser le procédé de fusion à l'arc décrit dans le brevet français n° 1 208 577 et ses additions n° 75893 et 82310.

A l'étape iii), le bain de liquide en fusion est coulé de manière à former un filet et ce filet est dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière fondue connu de l'homme de l'art.

A l'étape iv), les gouttelettes sont refroidies pour se solidifier sous la forme de billes solides. Le refroidissement peut résulter de la dispersion. La vitesse de refroidissement peut être adaptée en fonction du degré de cristallisation souhaité.

Une dispersion par soufflage classique ne permet pas d'obtenir une poudre présentant une distribution granulométrique selon l'invention. A l'étape v), la poudre obtenue subit donc de préférence un tri granulométrique, par exemple par tamisage ou par séparation à air, configuré pour obtenir une distribution granulométrique selon l'invention.

Un double tamisage, à une valeur de coupure supérieure à la taille médiane et à une valeur de coupure inférieure à la taille médiane, permet en particulier de réduire le span S. Plus les deux tamis ont des valeurs de coupure proches, plus le span S de la poudre tamisée est faible.

Pour fabriquer une poudre de billes frittées selon l'invention, on peut procéder suivant un procédé comportant les étapes suivantes :

i') optionnellement broyage d'une ou plusieurs poudres de matières premières apportant des constituants des billes à fabriquer et/ou des précurseurs de ces constituants, de préférence par cobroyage, et dosage desdites poudres de matières premières optionnellement broyées, de manière à obtenir un mélange particulaire présentant une taille médiane inférieure à 0,6 $\mu$m,

ii') optionnellement, séchage dudit mélange particulaire,

iii') préparation d'une charge de départ à partir dudit mélange particulaire, optionnellement séché,

iv') mise en forme de la charge de départ sous la forme de billes crues,

v') optionnellement, lavage,

vi') optionnellement, séchage,

vii') frittage de manière à obtenir une poudre de billes frittées,

viii') sélection granulométrique de manière que la poudre soit conforme à l'invention.

A l'étape i'), les poudres de matières premières peuvent être broyées individuellement ou, de préférence, cobroyées, si leur mélange dans des proportions adaptées pour la fabrication de billes céramiques présentant la composition recherchée ne conduit pas à un mélange particulaire présentant une taille médiane inférieure à 0,6 $\mu$m. Ce broyage peut être un broyage humide.

De préférence, un broyage ou un cobroyage est effectué de manière que la taille médiane dudit mélange particulaire soit inférieure à 0,5 $\mu$m, de préférence inférieure à 0,4 $\mu$m.

A l'étape ii'), optionnelle, le mélange particulaire est séché, par exemple en étuve ou par atomisation, en particulier s'il a été obtenu par broyage humide. De préférence, la température et/ou la durée de l'étape de séchage sont adaptées de manière à ce que l'humidité résiduelle du mélange particulaire soit inférieure à 2%, voire inférieure à 1,5%.

A l'étape iii'), on prépare, de préférence à température ambiante, une charge de départ adaptée au procédé de mise en forme de l'étape iv'), comme cela est bien connu de l'homme du métier.

La charge de départ peut comporter, en plus du mélange particulaire, un solvant, de préférence de l'eau, dont la quantité est adaptée à la méthode de mise en forme de l'étape iv'). La charge de départ est alors constituée du mélange particulaire et du solvant.

A l'étape iv'), tout procédé conventionnel de mise en forme connu pour la fabrication de billes frittées peut être mis en œuvre. Parmi ces procédés, on peut citer :

- les procédés de granulation, mettant par exemple en œuvre des granulateurs, des granulateurs à lit fluidisé, ou des disques de granulation,
- les procédés de gélification,
- les procédés de moulage par injection ou extrusion, et
- les procédés de pressage.

La mise en forme peut en particulier résulter d'un procédé de gélification. A cet effet, un solvant, de préférence de l'eau, est ajouté à la charge de départ de manière à réaliser une suspension. La suspension présente de préférence une teneur massique en matière sèche comprise entre 50 et 70%. La suspension peut encore comporter un ou plusieurs des constituants suivants :

- un dispersant, à raison de 0 à 10%, en pourcentage massique sur la base de la matière sèche ;
- un modificateur de tension de surface, à raison de 0 à 3%, en pourcentage massique sur la base de la matière sèche ;
- un agent gélifiant, ou « agent de gélification », à raison de 0 à 2%, en pourcentage massique sur la base de la matière sèche.

Les dispersants, modificateurs de tension de surface et agents gélifiants sont bien connus de l'homme du métier.

Le mélange particulaire est de préférence ajouté dans un mélange d'eau et de dispersants/défloculants, dans un broyeur à boulets. Après agitation, on ajoute de l'eau dans laquelle a été préalablement dissout un agent gélifiant de manière à obtenir une suspension.

Dans un procédé de gélification, des gouttes de la suspension décrite ci-dessus sont obtenues par écoulement de la suspension à travers un orifice calibré. Les gouttes sortant de l'orifice tombent dans un bain d'une solution de gélification (électrolyte adapté pour réagir avec l'agent gélifiant) où elles durcissent après avoir recouvré une forme sensiblement sphérique.

A l'étape v'), optionnelle, les billes crues obtenues lors de l'étape précédente sont lavées, par exemple à l'eau.

A l'étape vi'), optionnelle, les billes crues, éventuellement lavées, sont séchées, par exemple à l'étuve.

A l'étape vii'), les billes crues, éventuellement lavées et/ou séchées, sont frittées. De préférence, le frittage s'effectue sous air, de préférence dans un four électrique, de préférence à pression atmosphérique.

La température de frittage et la durée de frittage sont adaptées à la composition des billes.

A l'étape vii'), la poudre obtenue subit un tri granulométrique, par exemple par tamisage et/ou par séparation à air, configuré pour obtenir une distribution granulométrique selon l'invention.

Un double tamisage, à une valeur de coupure supérieure à la taille médiane et à une valeur de coupure inférieure à la taille médiane, permet de réduire le span S. Plus les deux tamis ont des valeurs de coupure proches, plus le span S de la poudre tamisée est faible.

*Poudre*

Les particules d'une poudre selon l'invention peuvent être notamment en un matériau fondu ou en un matériau fritté.

De préférence, une poudre selon l'invention comporte, pour plus de 95%, de préférence plus de 97%, de préférence plus de 98%, de préférence plus de 99%, de préférence sensiblement 100% de sa masse, des billes et des morceaux de billes.

Les billes représentent de préférence plus de 95%, de préférence plus de 97%, de préférence plus de 98%, de préférence plus de 99%, de préférence sensiblement 100% de la masse des billes et des morceaux de billes.

De préférence, plus de 80%, de préférence plus de 85%, de préférence plus de 90%, de préférence plus de 95%, de préférence plus de 97% en masse des particules de la poudre présentent chacune une sphéricité supérieure à 0,80, de préférence supérieure à 0,85, de préférence supérieure à 0,90, de préférence supérieure à 0,92, de préférence supérieure à 0,94, de préférence supérieure à 0,95.

La sphéricité médiane de la poudre de particules est de préférence supérieure à 0,80, de préférence supérieure à 0,85, de préférence supérieure à 0,90, de préférence supérieure à 0,92, de préférence supérieure à 0,94, de préférence supérieure à 0,95, de préférence supérieure à 0,97, de préférence supérieure à 0,98.

Dans un mode de réalisation, la poudre comporte ainsi plus de 97%, de préférence plus de 98%, de préférence plus de 99% en masse de billes. En particulier, avant la première projection, la poudre initiale est de préférence sensiblement constituée de billes.

De préférence, après la première projection, la poudre récupérée est sensiblement constituée de billes et de morceaux de billes résultant de l'opération de projection.

Les inventeurs ont découvert l'importance de la valeur du rapport S de la poudre initiale sur l'efficacité du tri lors du tamisage de la poudre récupérée. En particulier, de préférence $S \leq -0,116.1n(D_{50}) + 0,905$, de préférence $S \leq -0,114.1n(D_{50}) + 0,869$, de préférence $S \leq -0,107.1n(D_{50}) + 0,800$.

La poudre de particules présente une taille maximale inférieure à 1800 $\mu$m, de préférence inférieure à 1500 $\mu$m.

De préférence, la poudre de particules présente une taille médiane $D_{50}$ supérieure à 80 $\mu$m, de préférence supérieure à 100 $\mu$m, de préférence supérieure à 150 $\mu$m, de préférence supérieure à 200 $\mu$m, de préférence supérieure à 400 $\mu$m.Ce mode de réalisation est particulièrement bien adapté pour un grenaillage de précontrainte. En outre, les pertes par aspiration sont diminuées et ladite poudre est plus polyvalente. Elle peut notamment être utilisée dans un équipement à propulsion pneumatique et un équipement propulsion par une turbine.

Dans un mode de réalisation, la poudre de particules présente une taille médiane $D_{50}$ supérieure à 80 $\mu$m, de préférence supérieure à 100 $\mu$m, de préférence supérieure à 150 $\mu$m, de préférence supérieure à 200 $\mu$m, de préférence supérieure à 400 $\mu$m et/ou inférieure à 1000 $\mu$m, de préférence inférieure à 800 $\mu$m.Ce mode de réalisation est particulièrement bien adapté pour un grenaillage de précontrainte.

Dans un mode de réalisation, la poudre de particules présente une taille médiane $D_{50}$ inférieure à 200 $\mu$m, de préférence inférieure à 150 $\mu$m.Ce mode de réalisation est particulièrement bien adapté pour un grenaillage visant à modifier l'aspect de surface d'une pièce (en anglais *« cosmetic finishing »*).

Pour améliorer l'efficacité du grenaillage, les particules présentent de préférence une masse volumique apparente supérieure à 3,0 g/cm$^3$, de préférence supérieure à 3,5 g/cm$^3$, de préférence supérieure à 3,7 g/cm$^3$, de préférence supérieure à 3,8 g/cm$^3$, et/ou inférieure à 7,0 g/cm$^3$, de préférence inférieure à 6,5 g/cm$^3$, et/ou les particules présentent de préférence une dureté supérieure à 500 HV$_{(0,5/15)}$, de préférence supérieure à 600 HV$_{(0,5/15)}$, de préférence supérieure à 700 HV$_{(0,5/15)}$, de préférence supérieure à 800 HV$_{(0,5/15)}$, de préférence supérieure à 900 HV$_{(0,5/15)}$, et/ou de préférence inférieure à 1300 HV$_{(0,5/15)}$.

Dans un mode de réalisation, les billes de la poudre présentent une surface polie. Avantageusement, la pièce traitée présente un meilleur comportement en fatigue vis-à-vis d'une sollicitation cyclique.

Les particules d'une poudre selon l'invention peuvent être notamment en un matériau choisi parmi les oxydes, les nitrures, les carbures, les borures, les oxycarbures, les oxynitrures et leurs mélanges.

De préférence, les particules sont constituées d'oxydes pour plus de 50%, de préférence pour plus de 70%, de préférence pour plus de 90%, de préférence pour plus de 95%, de préférence pour plus de 97%, de préférence pour plus de 99% de leur masse.

Une poudre selon l'invention peut en particulier présenter une ou plusieurs des caractéristiques de composition suivantes :

- La poudre présente une teneur en ZrO$_2$ supérieure à 50%, voire supérieure à 60%, voire supérieure à 70% et/ou inférieure à 96%, voire inférieure à 90%, en pourcentages massiques sur la base des oxydes ;
- Plus de 80%, de préférence plus de 85%, de préférence plus de 90% en masse des particules de la poudre présentent chacune une teneur en ZrO$_2$ supérieure à 50%, voire supérieure à 60%, voire supérieure à 70% et/ou inférieure à 96%, voire inférieure à 90%, en pourcentages massiques sur la base des oxydes ;
- Dans un mode de réalisation, la poudre présente une teneur en SiO$_2$ supérieure à 10%, voire supérieure à 15%, voire supérieure à 20%, voire supérieure à 25% et/ou inférieure à 45%, voire inférieure à 40%, en pourcentages massiques sur la base des oxydes ;
- Dans un mode de réalisation, plus de 80%, de préférence plus de 85%, de préférence plus de 90% en masse des particules de la poudre présentent chacune une teneur en SiO$_2$ supérieure à 10%, voire supérieure à 15%, voire supérieure à 20%, voire supérieure à 25% et/ou inférieure à 45%, voire inférieure à 40%, en pourcentages massiques sur la base des oxydes ;
- Dans un mode de réalisation, la poudre présente une teneur en SiO$_2$ inférieure à 10%, voire inférieure à 5%, voire inférieure à 1%, en pourcentages massiques sur la base des oxydes ;
- Dans un mode de réalisation, plus de 80%, de préférence plus de 85%, de préférence plus de 90% en masse des particules de la poudre présentent chacune une teneur en SiO$_2$ inférieure à 10%, voire inférieure à 5%, voire inférieure à 1%, en pourcentages massiques sur la base des oxydes ;
- Dans un mode de réalisation, la poudre présente une teneur en Al$_2$O$_3$ inférieure à 15%, voire inférieure à 10%, voire inférieure à 5%, voire inférieure à 3%, en pourcentages massiques sur la base des oxydes ;
- Plus de 80%, de préférence plus de 85%, de préférence plus de 90% en masse des particules de la poudre présentent chacune une teneur en Al$_2$O$_3$ inférieure à 15%, voire inférieure à 10%, voire inférieure à 5%, voire inférieure à 3%, en pourcentages massiques sur la base des oxydes ;

- Dans un mode de réalisation, la poudre présente une teneur en $CeO_2$ supérieure à 10%, de préférence supérieure à 14% et/ou inférieure à 20%, de préférence inférieure à 19%, en pourcentages massiques sur la base des oxydes ;
- Dans un mode de réalisation, plus de 80%, de préférence plus de 85%, de préférence plus de 90% en masse des particules de la poudre présentent chacune une teneur en $CeO_2$ supérieure à 10%, de préférence supérieure à 14% et/ou inférieure à 20%, de préférence inférieure à 19%, en pourcentages massiques sur la base des oxydes ;
- Dans un mode de réalisation, la poudre présente une teneur en $Y_2O_3$ supérieure à 2%, de préférence supérieure à 3% et/ou inférieure à 10%, de préférence inférieure à 8%, en pourcentages massiques sur la base des oxydes ;
- Dans un mode de réalisation, plus de 80%, de préférence plus de 85%, de préférence plus de 90% en masse des particules de la poudre présentent chacune une teneur en $Y_2O_3$ supérieure à 2%, de préférence supérieure à 3% et/ou inférieure à 10%, de préférence inférieure à 8%, en pourcentages massiques sur la base des oxydes ;
- La poudre présente une teneur totale en $ZrO_2 + SiO_2 + Al_2O_3 + CeO_2 + Y_2O_3$ supérieure à 80%, voire supérieure à 90%, voire supérieure à 95%, en pourcentages massiques sur la base des oxydes ;
- Plus de 80%, de préférence plus de 85%, de préférence plus de 90% en masse des particules de la poudre présentent chacune une teneur totale en $ZrO_2 + SiO_2 + Al_2O_3 + CeO_2 + Y_2O_3$ supérieure à 80%, voire supérieure à 90%, voire supérieure à 95%, en pourcentages massiques sur la base des oxydes ;
- Plus de 80%, de préférence plus de 85%, de préférence plus de 90% en masse des particules de la poudre présentent sensiblement la même analyse chimique ;
- Dans un mode de réalisation, la poudre, de préférence la poudre et plus de 80%, de préférence plus de 85%, de préférence plus de 90% en masse des particules de la poudre présentent l'analyse chimique suivante, en pourcentages massiques sur la base des oxydes et pour un total de 100% :

  $ZrO_2$ : 77% - 86% ;
  $CeO_2$ : 14% - 19% ;
  Oxydes autres que $ZrO_2$ et $CeO_2$ : $\leq$ 3%.

- Dans un mode de réalisation, la poudre, de préférence la poudre et plus de 80%, de préférence plus de 85%, de préférence plus de 90% en masse des particules de la poudre présentent l'analyse chimique suivante :

  $ZrO_2$ : 58% - 72% ;
  $SiO_2$ : 27% - 34% ;
  $Al_2O_3$ : $\leq$ 10% ;
  Oxydes autres que $ZrO_2$, $SiO_2$ et $Al_2O_3$ : $\leq$ 5% ;

- Dans un mode de réalisation, la poudre, de préférence la poudre et plus de 80%, de préférence plus de 85%, de préférence plus de 90% en masse des particules de la poudre présentent l'analyse chimique suivante, en pourcentages massiques sur la base des oxydes et pour un total de 100% :

  $ZrO_2$ : 89% - 96% ;
  $Y_2O_3$ : 3% - 8% ;
  Oxydes autres que $ZrO_2$ et $Al_2O_3$ : $\leq$ 3%.

### Procédé de grenaillage

**A l'étape a),** on projette, sur la surface à traiter d'une pièce, la poudre initiale lors du premier cycle d'étapes a) à c), puis la poudre reconditionnée lors des cycles suivants.

Toutes les techniques connues de grenaillage par projection peuvent être mises en œuvre.

De préférence, on ne projette pas de particules métalliques. De préférence on projette exclusivement des particules céramiques.

Dans un mode de réalisation, l'étape a) ne comporte qu'une unique opération de projection, c'est-à-dire qu'après projection de ladite poudre initiale et de la poudre reconditionnée, de préférence plusieurs fois, aucune opération ultérieure de projection n'est effectuée. Dans un mode de réalisation, le procédé ne comporte pas d'étape de projection d'un autre média qu'une poudre selon l'invention.

De préférence, la projection est réalisée au moyen d'une grenailleuse à air comprimé, de préférence à effet venturi ou à pression directe, de préférence à pression directe, ou au moyen d'une grenailleuse à turbine(s).

De préférence, les particules sont projetées à une vitesse supérieure à 40 m/s, de préférence supérieure à 48 m/s, voire supérieure à 50 m/s, voire supérieure à 55 m/s.

De préférence encore, les particules sont projetées suivant une direction formant un angle de projection avec la surface à traiter, l'angle de projection, c'est-à-dire l'angle entre la surface à traiter et ladite direction (l'axe du jet des particules projetées), étant de préférence supérieur à 45°, de préférence supérieur à 50°.

Les particules sont projetées en traversant une buse disposée à une distance, dite « distance de projection », de la surface à traiter, ladite distance de projection étant de préférence supérieure à 5 cm, de préférence supérieure à 10 cm et/ou de préférence inférieure à 30 cm, de préférence inférieure à 25 cm.

La buse de projection de la grenailleuse présente de préférence un diamètre supérieur à 6 mm, de préférence supérieur à 7 mm, et/ou inférieur à 15 mm, de préférence inférieur à 12 mm.

Les particules sont projetées sur la surface en étant portées par un fluide, de préférence l'air, dont la surpression (pression supplémentaire au-delà de la pression atmosphérique) est de préférence supérieure à 0,5 bar, de préférence supérieure à 1 bar et/ou de préférence inférieure à 4 bar, de préférence inférieure à 3 bar.

De préférence, le procédé comporte une aspiration, de préférence lors de l'étape a) de projection, afin de limiter la quantité de petites particules.

Les particules sont projetées avec un taux de recouvrement de préférence supérieur à 100%, de préférence supérieur à 120%, voire supérieur à 150% et/ou de préférence inférieur à 300%, de préférence inférieur à 250%, de préférence inférieur à 200%.

La surface à traiter peut subir, avant traitement par projection, un prétraitement, par exemple un polissage, par exemple de type miroir. Dans un mode de réalisation, la surface à traiter ne comporte pas de revêtement. Dans un mode de réalisation, la surface à traiter est en un matériau métallique, de préférence sous la forme d'un métal ou d'un alliage métallique, de préférence en acier, en aluminium ou en titane.

La surface à traiter peut être notamment une surface d'une pièce automobile, et notamment être choisie parmi un pignon, un arbre de transmission, un ressort, une barre de torsion, une bielle, et un vilebrequin.

Dans un mode de réalisation, la surface à traiter est une surface d'une pièce choisie dans le groupe formé par un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

A l'étape b),** les particules qui ont été projetées sur la surface à traiter sont récupérées. Classiquement, après avoir heurté la surface à traiter, les particules tombent dans le fond de la cabine de projection, où elles peuvent être récupérées.

Classiquement, la poudre initialement projetée est sensiblement constituée de billes. Une partie de ces billes se brisent lors de l'impact contre la surface à traiter. La poudre récupérée est alors sensiblement constituée des morceaux de billes cassées et des billes qui ont résisté à l'impact.

La poudre récupérée subit alors une opération de tri afin de limiter le taux de morceaux de billes. De manière surprenante, un simple tamisage, par exemple sur un tamis de mailles carrées, permet de séparer une partie substantielle des morceaux de billes. La maille du tamis est adaptée en fonction de la taille des particules de la poudre projetée. De simples essais permettent d'optimiser la maille pour maximiser la quantité de morceaux de billes extraits.

De préférence, l'étape b) ne comporte pas d'opération de tri en fonction de la forme des particules, par exemple au moyen d'un séparateur spiralé.

La poudre récupérée et traitée pour en extraire des morceaux de billes (ou « poudre recyclée ») est avantageusement adaptée pour une nouvelle projection. En particulier, elle peut être immédiatement renvoyée vers la grenailleuse pour être à nouveau projetée.

La poudre recyclée peut être également préalablement mélangée avec de la poudre initiale.

La quantité de poudre initiale dans la poudre reconditionnée est de préférence ajustée pour compenser la quantité de billes extraites lors du traitement de l'étape b). Autrement dit, de préférence on réinjecte toute la poudre recyclée et on la complète, autant que nécessaire, avec de la poudre initiale.

On appelle « poudre reconditionnée » la poudre qui est projetée après le premier cycle d'étapes a) à c).

A l'étape c),** la poudre reconditionnée (poudre recyclée ou mélange de poudre recyclée et de poudre initiale) remplace ainsi partiellement, voire totalement la poudre initiale, puis on reprend à l'étape a) avec la poudre reconditionnée.

## Exemples

Les exemples non limitatifs suivants sont donnés dans le but d'illustrer l'invention.

### Protocoles de mesure

Pour déterminer la sphéricité d'une bille, les plus petit et plus grand diamètres de Ferret sont mesurés sur un Camsizer XT commercialisé par la société Horiba.

La masse volumique apparente d'une poudre a été mesurée à l'aide d'un pycnomètre à hélium automatique Accupyc 1330.

La microdureté a été mesurée à l'aide d'un micro-duromètre Vickers Zwick 3212. Les valeurs sont obtenues à partir d'indentations Vickers à une charge 0,5 kg, ladite charge étant appliquée pendant un temps égal à 15 secondes $(HV_{(0,5/15)}$.

L'analyse chimique des poudres a été déterminée par fluorescence aux rayons X.

L'analyse granulométrique a été réalisée à l'aide d'un granulomètre laser Camsizer XT commercialisé par la société Horiba.

Pour déterminer la capacité, pour une poudre initiale, d'être recyclée après un simple tamisage, une quantité de 100 g de ladite poudre a été projetée, avec recirculation sur une surface à traiter en acier XC65, au moyen d'un pistolet à effet Venturi muni d'une buse de projection de diamètre 8 mm, disposée à 150 mm de la surface à traiter, avec un angle de projection de 85° et à une surpression égale à 4 bar. La projection a été poursuivie pendant 10 minutes.

A l'issue du traitement, les particules ayant frappé la surface à traiter (constituant la poudre récupérée) ont été récupérées et tamisées à l'aide d'un tamis à mailles carrées d'ouverture égale à « X » $\mu$m.Seul le refus au tamis (poudre recyclée) a été conservé.

Des clichés d'au moins 600 particules de la poudre recyclée ont été réalisés, à l'aide d'un microscope optique ou d'un microscope électronique à balayage, en fonction de la taille médiane de la poudre, chaque cliché représentant entre 100 et 200 particules.

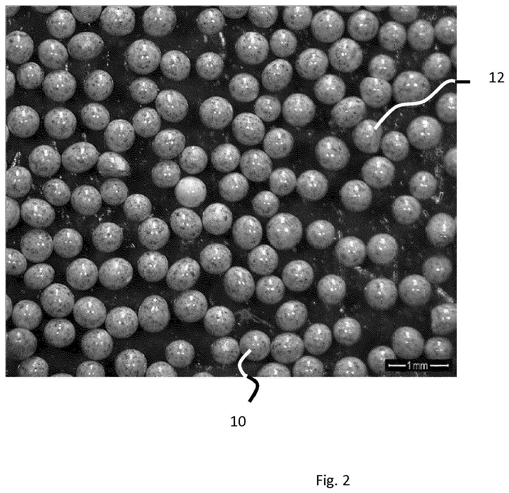

Le nombre de billes et le nombre de morceaux de billes ont été déterminés sur chaque cliché. Les morceaux de billes se reconnaissent facilement du fait qu'elles présentent des arêtes (voir la figure 2). Le taux de morceaux de billes est évalué par le nombre total de morceaux de billes divisé par le nombre total de particules observées.

On considère que les résultats sont particulièrement satisfaisants si le taux de morceaux de billes est inférieur ou égal à 5%, de préférence inférieur ou égal à 4%, de préférence inférieur ou égal à 3%, de préférence inférieur ou égal à 2%, de préférence inférieur ou égal à 1%.

*Poudres testées*

Les poudres des exemples 2, 4 et 6 sont destinées à servir de bases de comparaison pour les poudres des exemples 1, 3 et 5, respectivement. Deux poudres ne sont en effet comparables que si elles présentent des tailles médianes sensiblement identiques.

La poudre initiale de l'exemple 1, hors invention, est une poudre de billes de Microblast® B120 commercialisée par la société Saint-Gobain Zirpro.

La poudre initiale de l'exemple 2, selon l'invention, est une poudre de billes Microblast® B120, qui a été tamisée de manière à récupérer les billes passant à travers un tamis de maille carrée d'ouverture égale à 106 $\mu$m et ne passant pas à travers un tamis de maille carrée d'ouverture égale à 90 $\mu$m, ledit tamisage étant effectué sur une tamiseuse AS 200 commercialisée par la société Retsch. Ce traitement a permis d'obtenir une distribution granulométrique selon l'invention.

La poudre initiale de l'exemple 3, hors invention, est une poudre de billes de Zirshot® Z425 commercialisée par la société Saint-Gobain Zirpro.

La poudre initiale de l'exemple 4, selon l'invention, est une poudre de billes Zirshot® Z425, qui a été tamisée de manière à récupérer les billes passant à travers un tamis de maille carrée d'ouverture égale à 450 $\mu$m et ne passant pas à travers un tamis de maille carrée d'ouverture égale à 540 $\mu$m, ledit tamisage étant effectué sur une tamiseuse AS 200 commercialisée par la société Retsch. Ce traitement a permis d'obtenir une distribution granulométrique selon l'invention.

La poudre initiale de l'exemple 5, hors invention, est une poudre de billes de Zirshot® Z850 commercialisé par la société Saint-Gobain Zirpro.

La poudre initiale de l'exemple 6, selon l'invention, est une poudre de billes Zirshot® Z850, qui a été tamisée de manière à récupérer les billes passant à travers un tamis de maille carrée d'ouverture égale à 900 $\mu$m et ne passant pas à travers un tamis de maille carrée d'ouverture égale à 1000 $\mu$m, ledit tamisage étant effectué sur une tamiseuse AS 200 commercialisée par la société Retsch. Ce traitement a permis d'obtenir une distribution granulométrique selon l'invention.

Après essai de projection, les poudres des exemples ont été tamisées à l'aide d'un tamis à mailles carrées d'ouverture égale à X $\mu$m figurant dans le tableau 1 suivant.

Tableau 1

| Exemple | 1 (*) | 2 | 3(*) | 4 | 5(*) | 6 |
|---|---|---|---|---|---|---|
| X ($\mu$m) | 63 | 63 | 425 | 425 | 850 | 850 |
| (*) hors invention | | | | | | |

*Résultats*

Les résultats obtenus figurent dans le tableau 2 suivant.

Tableau 2

|  |  | Exemples | 1 (*) | 2 | 3(*) | 4 | 5(*) | 6 |
|---|---|---|---|---|---|---|---|---|
| **Caractéristiques des poudres de billes initiales** | | | | | | | | |
| Analyse chimique (en % en masse sur la base des oxydes) | $ZrO_2$ | | 65,6 | | | | | |
| | $SiO_2$ | | 28,8 | | | | | |
| | $Al_2O_3$ | | 4,8 | | | | | |
| | Autres oxydes | | 0,8 | | | | | |
| Caractéristiques granulométriques | $D_{50}$ (μm) | | 92 | 95 | 500 | 478 | 1012 | 1010 |
| | $D_{99,5}$ (μm) | | 183 | 168 | 826 | 752 | 1450 | 1433 |
| | $D_{90}$ (μm) | | 127 | 112 | 587 | 525 | 1090 | 1065 |
| | $D_{10}$ (μm) | | 61 | 80 | 433 | 440 | 919 | 959 |
| | $S = ((D_{90}-D_{10})/D_{50})$ | | 0,72 | 0,34 | 0,31 | 0,18 | 0,17 | 0,10 |
| | $-0{,}126.\ln(D_{50}) + 0{,}980$ | | 0,41 | 0,41 | 0,20 | 0,20 | 0,11 | 0,11 |
| | $-0{,}116.\ln(D_{50}) + 0{,}905$ | | 0,38 | 0,38 | 0,18 | 0,19 | 0,10 | 0,10 |
| | $-0{,}114.\ln(D_{50}) + 0{,}869$ | | 0,35 | 0,35 | 0,16 | 0,17 | 0,08 | 0,08 |
| | $-0{,}107.\ln(D_{50}) + 0{,}800$ | | 0,32 | 0,31 | 0,14 | 0,14 | 0,06 | 0,06 |
| Autres caractéristiques physiques | Sphéricité médiane | | 0,89 | 0,90 | 0,95 | 0,95 | 0,95 | 0,95 |
| | masse volumique apparente (g/cm$^3$) | | 3,85 | 3,85 | 3,85 | 3,85 | 3,85 | 3,85 |
| | Dureté HV $_{(0,5/15)}$ | | 700 | 700 | 700 | 700 | 700 | 700 |
| **Résultat après essai de projection** | | | | | | | | |
| Taux de morceaux de billes (%) | | | 7 | 4 | 7 | 4 | 6 | 3 |
| (*) hors invention | | | | | | | | |

Une comparaison de l'exemple 1, hors invention, et de l'exemple 2 montre qu'après projection, une unique opération de tamisage à l'aide d'un tamis de maille carrée d'ouverture égale à 63 μm permet d'obtenir des taux de morceaux de billes de 4% dans la poudre selon l'invention et de 7% dans la poudre comparative.

Une comparaison de l'exemple 3, hors invention, et de l'exemple 4 montre, qu'après projection, une unique opération de tamisage à l'aide d'un tamis de maille carrée d'ouverture égale à 425 μm permet d'obtenir des taux de morceaux de billes de 4% dans la poudre selon l'invention et de 7% dans la poudre comparative.

Une comparaison de l'exemple 5, hors invention, et de l'exemple 6 montre, qu'après projection, une unique opération de tamisage à l'aide d'un tamis de maille carrée d'ouverture égale à 850 μm permet d'obtenir des taux de morceaux de billes de 3% dans la poudre selon l'invention et de 6% dans la poudre comparative.

Comme cela apparaît clairement à présent, l'invention permet de réduire de 42% à 50% le taux de morceaux de billes, jusqu'à des valeurs autorisant un recyclage immédiat, alors même qu'elle ne met en œuvre que des moyens de tri beaucoup plus simples que ceux utilisés jusqu'à présent.


**Revendications**

1.  Poudre de grenaillage constituée de particules en céramique,

    comportant plus de 95% en masse de billes,
    présentant une taille médiane $D_{50}$ supérieure à 50 μm et inférieure à 1200 μm, et présentant une valeur

$(D_{90}-D_{10})/D_{50}$, ou « S », telle que

$$S \leq -0,126.\ln(D_{50}) + 0,980 \qquad (1)$$

$D_{10}$, $D_{50}$ et $D_{90}$ étant des tailles de particules correspondant aux pourcentages égaux respectivement à 10%, 50% et 90% en volume, sur la courbe de distribution granulométrique cumulée des tailles de particules de la poudre, lesdites tailles de particules étant classées par ordre croissant et étant exprimés en $\mu$m, une bille étant une particule présentant une sphéricité supérieure ou égale à 0,75.

2. Poudre selon la revendication immédiatement précédente, dans laquelle

$$S \leq -0,116.\ln(D_{50}) + 0,905.$$

3. Poudre selon la revendication immédiatement précédente, dans laquelle

$$S \leq -0,114.\ln(D_{50}) + 0,869.$$

4. Poudre selon la revendication immédiatement précédente, dans laquelle

$$S \leq -0,107.\ln(D_{50}) + 0,800.$$

5. Poudre selon l'une quelconque des revendications précédentes, comportant plus de 98% en masse de billes.

6. Poudre selon l'une quelconque des revendications précédentes, comportant moins de 5% en nombre de morceaux de billes.

7. Poudre selon l'une quelconque des revendications précédentes, présentant une teneur totale en $ZrO_2$ + $SiO_2$ + $Al_2O_3$ + $CeO_2$ + $Y_2O_3$ supérieure à 80%, en pourcentages massiques sur la base des oxydes.

8. Poudre selon l'une quelconque des revendications précédentes, présentant une analyse chimique telle que, en pourcentages massiques sur la base des oxydes et pour un total de 100% :

$ZrO_2$ : 77% - 86% ;
$CeO_2$ : 14% - 19% ;
Oxydes autres que $ZrO_2$ et $CeO_2$ : $\leq$ 3% ;
ou telle que
$ZrO_2$ : 58% - 72% ;
$SiO_2$ : 27% - 34% ;
$Al_2O_3$ : $\leq$ 10% ;
Oxydes autres que $ZrO_2$, $SiO_2$ et $Al_2O_3$ : $\leq$ 5% ;
ou telle que
$ZrO_2$ : 89% - 96% ;
$Y_2O_3$ : 3% - 8% ;
Oxydes autres que $ZrO_2$ et $Al_2O_3$ : $\leq$ 3%.

9. Procédé de grenaillage comportant les étapes suivantes :

a) projection d'une poudre initiale sur une surface à traiter d'une pièce ;
b) récupération de ladite poudre projetée et traitement de ladite poudre récupérée de manière à obtenir une poudre recyclée ;
c) remplacement, au moins partiel, de ladite poudre initiale par ladite poudre recyclée de manière à obtenir une poudre reconditionnée, et reprise à l'étape a) avec la poudre reconditionnée ; **caractérisé en ce que** la poudre initiale est
conforme à l'une quelconque des revendications précédentes.

**10.** Procédé selon la revendication immédiatement précédente, dans lequel le traitement à l'étape b) ne comporte pas d'opération de tri en fonction de la forme des particules de la poudre.

**11.** Procédé selon l'une quelconque des revendications 9 à 10, dans lequel le traitement à l'étape b) ne comporte pas d'opération de tri au moyen d'un séparateur spiralé.

**12.** Procédé selon l'une quelconque des revendications 9 à 11, dans lequel le traitement à l'étape b) est constitué d'un tamisage et, optionnellement, d'une aspiration.

**13.** Procédé selon l'une quelconque des revendications 9 à 12, la pièce étant choisie dans le groupe formé par une pièce automobile, un bijou, une montre, un bracelet, un collier, une bague, une broche, une épingle de cravate, un sac à main, un meuble, un ustensile ménager, une poignée, un bouton, un placage, une partie visible d'un équipement de bien de consommation, une partie de monture de lunettes, un article de vaisselle et un cadre.

**14.** Utilisation d'un procédé selon l'une quelconque des revendications 9 à 13 pour créer des précontraintes de compression sur la surface à traiter, la poudre initiale présentant une taille médiane $D_{50}$ supérieure à 80 $\mu$m et inférieure à 1000 $\mu$m, ou pour modifier l'aspect de la surface à traiter, la poudre initiale présentant une taille médiane $D_{50}$ inférieure à 200 $\mu$m.

**Patentansprüche**

**1.** Kugelstrahlpulver, das aus Keramikpartikeln besteht,

wobei es mehr als 95 Massen-% an Kugeln aufweist, wobei es einen Medianwert der Größe $D_{50}$ von mehr als 50 $\mu$m und weniger als 1200 $\mu$m hat, und wobei es einen derartigen Wert $(D_{90}-D_{10})/D_{50}$, oder "S", hat, dass

$$S \leq -0{,}126.\ln(D_{50}) + 0{,}980 \qquad (1)$$

wobei es sich bei $D_{10}$, $D_{50}$ und $D_{90}$ um Partikelgrößen handelt, die auf der kumulierten Korngrößenverteilungskurve der Korngrößen des Pulvers 10 %, 50 % beziehungsweise 90 % nach Volumen entsprechen, wobei die Partikelgrößen in aufsteigender Ordnung klassifiziert sind und in $\mu$m ausgedrückt sind,
wobei als Kugel ein Partikel bezeichnet wird, der eine Spherizität von mindestens 0,75 hat.

**2.** Pulver nach dem unmittelbar vorhergehenden Anspruch, wobei

$$S \leq -0{,}116.\ln(D_{50}) + 0{,}905.$$

**3.** Pulver nach dem unmittelbar vorhergehenden Anspruch, wobei

$$S \leq -0{,}114.\ln(D_{50}) + 0{,}869.$$

**4.** Pulver nach dem unmittelbar vorhergehenden Anspruch, wobei

$$S \leq -0{,}107.\ln(D_{50}) + 0{,}800.$$

**5.** Pulver nach einem beliebigen der vorhergehenden Ansprüche, wobei es mehr als 98 Massen-% an Kugeln aufweist.

**6.** Pulver nach einem beliebigen der vorhergehenden Ansprüche, wobei es weniger als 5 % nach Anzahl an Kugelbruchstücken aufweist.

**7.** Pulver nach einem beliebigen der vorhergehenden Ansprüche, wobei es einen Gesamtgehalt an $ZrO_2$ + $SiO_2$ + $Al_2O_3$ + $CeO_2$ + $Y_2O_3$ von mehr als 80 % hat, nach den jeweiligen Massenprozentanteilen auf Grundlage der Oxide.

8. Pulver nach einem beliebigen der vorhergehenden Ansprüche, wobei die chemische Analyse desselben derart ist, dass nach Massenprozentanteilen auf Grundlage der Oxide und für insgesamt 100 % gilt:

$ZrO_2$: 77 % bis 86%;
$CeO_2$: 14 % bis 19%;
andere Oxide als $ZrO_2$ und $CeO_2$: ≤3 %;
oder derart, dass Folgendes gilt
$ZrO_2$: 58 % bis 72 %;
$SiO_2$: 27 % bis 34 %;
$Al_2O_3$: ≤10 %;
andere Oxide als $ZrO_2$, $SiO_2$ und $Al_2O_3$: ≤5 %;
oder derart, dass Folgendes gilt
$ZrO_2$: 89 % bis 96 %;
$Y_2O_3$: 3% bis 8% ;
andere Oxide als $ZrO_2$ und $Al_2O_3$: ≤3 %.

9. Kugelstrahlverfahren, das die folgenden Schritte aufweist:

a) Verspritzen eines Ausgangspulvers auf eine zu behandelnde Fläche eines Werkstücks;
b) Zurückgewinnen des verspritzten Pulvers und Behandeln des zurückgewonnenen Pulvers derart, dass ein zur Wiederverwendung bestimmtes Pulver erhalten wird;
c) Ersetzen, zumindest teilweise, des Ausgangspulvers durch das zur Wiederverwendung bestimmte Pulver, sodass ein aufbereitetes Pulver erhalten wird, und erneutes Durchführen des Schritts a) mit dem aufbereiteten Pulver;

**dadurch gekennzeichnet, dass** das Ausgangspulver einem der vorhergehenden Ansprüche entspricht.

10. Verfahren nach dem unmittelbar vorhergehenden Anspruch, wobei die Behandlung im Schritt b) keinerlei Vorgang des Sortierens in Abhängigkeit von der Form der Partikel des Pulvers aufweist.

11. Verfahren nach einem beliebigen der Ansprüche 9 bis 10, wobei die Behandlung in Schritt b) keinerlei Vorgang des Sortierens mittels eines Schneckentrieurs aufweist.

12. Verfahren nach einem beliebigen der Ansprüche 9 bis 11, wobei die Behandlung im Schritt b) in einem Siebvorgang und, möglicherweise, einem Ansaugvorgang besteht.

13. Verfahren nach einem beliebigen der Ansprüche 9 bis 12, wobei das Werkstück aus der Gruppe ausgewählt ist, die von einem Automobilbauteil, einem Schmuckstück, einer Uhr, einem Armband, einer Halskette, einem Ring, einer Brosche, einer Krawattennadel, einer Handtasche, einem Möbelstück, einem Haushaltsgegenstand, einem Handgriff, einem Knopf, einer Verblendung, einem sichtbaren Abschnitt eines Verbrauchsgutes, einem Abschnitt eines Brillengestells, einem Geschirrartikel und einem Rahmen gebildet wird.

14. Anwendung eines Verfahren nach einem beliebigen der Ansprüche 9 bis 13, um Druckvorspannungen auf der zu behandelnden Fläche zu erzeugen, wobei das Ausgangspulver einen Medianwert der Größe $D_{50}$ von mehr als 80 μm und weniger als 1000 μm aufweist, oder um das Aussehen der zu behandelnden Fläche zu verändern, wobei das Ausgangspulver einen Medianwert der Größe $D_{50}$ von weniger als 200 μm aufweist.

**Claims**

1. Shot-peening powder consisting of ceramic particles, comprising more than 95% by mass of beads,

having a median size $D_{50}$ greater than 50 μm and less than 1200 μm, and
having a value $(D_{90}-D_{10})/D_{50}$, or "S", such that

$$S \leq -0.126 \cdot \ln(D_{50}) + 0.980 \qquad (1)$$

$D_{10}$, $D_{50}$ and $D_{90}$ being particle sizes corresponding to the percentages equal to 10%, 50% and 90% by volume, respectively, on the cumulative particle size distribution curve of the powder, said particle sizes being ranked in ascending order and being expressed in $\mu$m,
a bead being a particle with a sphericity greater than or equal to 0.75.

2. Powder according to the immediately preceding claim, wherein

$$S \leq -0.116 \cdot \ln(D_{50}) + 0.905.$$

3. Powder according to the immediately preceding claim, wherein

$$S \leq -0.114 \cdot \ln(D_{50}) + 0.869.$$

4. Powder according to the immediately preceding claim, wherein

$$S \leq -0.107 \cdot \ln(D_{50}) + 0.800.$$

5. Powder according to any one of the preceding claims, comprising more than 98% by mass of beads.

6. Powder according to any one of the preceding claims, comprising less than 5% by number of bead pieces.

7. Powder according to any one of the preceding claims, having a total $ZrO_2$ + $SiO_2$ + $Al_2O_3$ + $CeO_2$ + $Y_2O_3$ content greater than 80%, in mass percentages on the oxide basis.

8. Powder according to any one of the preceding claims, having a chemical analysis such that, in mass percentages on the oxide basis and for a total of 100%:

   $ZrO_2$: 77% - 86%;
   $CeO_2$: 14% - 19%;
   Oxides other than $ZrO_2$ and $CeO_2$: $\leq$ 3%; or such that
   $ZrO_2$: 58% - 72%;
   $SiO_2$: 27% - 34%;
   $Al_2O_3$: $\leq$ 10%;
   Oxides other than $ZrO_2$, $SiO_2$ and $Al_2O_3$: $\leq$ 5%; or such that
   $ZrO_2$: 89% - 96%;
   $Y_2O_3$: 3% - 8%;
   Oxides other than $ZrO_2$ and $Al_2O_3$: $\leq$ 3%.

9. Shot-peening process comprising the following steps:

   a) projection of an initial powder on a surface to be treated of a part;
   b) recovery of said projected powder and treatment of said recovered powder so as to obtain a recycled powder;
   c) at least partial replacement of said initial powder by said recycled powder so as to obtain a reconditioned powder, and return to step a) with the reconditioned powder; **characterized in that**

   the initial powder is in accordance with any one of the preceding claims.

10. Process according to the immediately preceding claim, wherein the treatment in step b) does not comprise a sorting operation according to the shape of the powder particles.

11. Process according to either one of Claims 9 and 10, wherein the treatment in step b) does not comprise a sorting operation by means of a spiral separator.

12. Process according to any one of Claims 9 to 11, wherein the treatment in step b) consists of screening and, optionally, suction.

13. Process according to any one of Claims 9 to 12, wherein the part is selected from the group consisting of an automobile part, a piece of jewelry, a watch, a bracelet, a necklace, a ring, a brooch, a tie pin, a handbag, a piece of furniture, a household utensil, a handle, a button, a plating, a visible part of a consumer goods equipment item, a part of an eyeglass frame, a dishware item, and a frame.

14. Use of a process according to any one of Claims 9 to 13 for creating compressive prestressing on the surface to be treated, the initial powder having a median size $D_{50}$ greater than 80 $\mu$m and less than 1000 $\mu$m, or for modifying the appearance of the surface to be treated, the initial powder having a median size $D_{50}$ less than 200 $\mu$m.

Poudre initiale

Poudre reconditionnée

a)  projection d'une poudre initiale sur une surface à traiter
    d'une pièce

Poudre récupérée

b)  récupération de ladite poudre projetée et traitement de ladite
    poudre récupérée de manière à obtenir une poudre recyclée

Poudre recyclée

c)  remplacement, au moins partiel, de ladite poudre initiale par
    ladite poudre recyclée

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2925378 A1
- JP 2002114968 A
- FR 1208577
- FR 75893
- FR 82310